Europäisches Patentamt

European Patent Office

Office européen des brevets

(19)

(11) Publication number:

0 393 829
A2

## (12) EUROPEAN PATENT APPLICATION

(21) Application number: 90302570.8

(22) Date of filing: 09.03.90

(51) Int. Cl.5: G02B 6/42

(30) Priority: 18.03.89 GB 8906269

(43) Date of publication of application:
24.10.90 Bulletin 90/43

(84) Designated Contracting States:
DE FR NL

(71) Applicant: Smiths Industries Public Limited
Company
765, Finchley Road
London, NW11 8DS(GB)

(72) Inventor: Baker, Peter David
7 Vyne Row
Basingstoke, Hampshire(GB)
Inventor: Jenkins, Shirley Mair
7, Chatsworth Road
Farnborough, Hampshire(GB)
Inventor: Sinclair, David
9, Copse View Close, Chineham
Nr Basingstoke, Hampshire(GB)

(74) Representative: Flint, Jonathan McNeill
SMITHS INDUSTRIES PUBLIC LIMITED
COMPANY 765 Finchley Road
London NW11 8DS(GB)

(54) Optical assemblies.

(57) An optical assembly comprises an opto-electronic device 2 mounted on a substrate 1. The substrate has an optical fibre 12 extending within its thickness parallel to the surface 13 of the substrate. A transverse aperture 16 extends from the surface of the substrate, beneath an optical port 21 of the device, to the fibre 12. The fibre 12 is coupled to the port 21 such as by means of a reflector 19 or by transparent rod which may extend into the recess 22 forming the port. Electrical terminals 20 of the device 2 extend in plated holes 14 of the substrate 2 and are connected to conductive tracks 11. Optical connection is made to the device 2 via transverse apertures 133 which extend to the fibre 12 and which couple with an optical connector 130.

# OPTICAL ASSEMBLIES

This invention relates to optical assemblies of the kind including an optical device having an optical port by which optical radiation can be supplied to or from the device, and a planar substrate on a surface of which the device is mounted.

Conventional opto-electronic devices are commonly mounted on a substrate by which electrical connection is made to the device, such as via conductive tracks on or within the substrate. In this respect, the substrate may be a multilayer circuit board having plated-through holes which extend to the surface of the board and to which terminals on the device are soldered. Optical connection to such devices is made by means of a separate optical fibre coupled to an optical port on the device. The optical fibre extends over the substrate to another device, connector, sensor or the like. This arrangement leads to difficulties with making the optical interconnections because of the need to route the optical fibres, and can make maintenance and repair difficult, especially where a large number of optical fibres are used, because these impede access to the devices. Because the optical fibres are exposed, they are liable to damage and must be screened from optical radiation.

It is an object of the present invention to provide optical apparatus that can be used to alleviate these problems.

According to one aspect of the present invention there is provided an optical assembly of the above-specified kind, characterised in that the substrate has an optical radiation waveguide that extends within the thickness of the substrate in a plane parallel to the surface, that a transverse aperture extends through a part at least of the thickness of the substrate from the surface to the waveguide, and that the aperture optically interconnects the port with the waveguide.

The optical device preferably includes electrical means, the substrate including an electrically conductive element by means of which electrical signals are supplied to or from the electrical means. The optical device may include electrical terminals, the terminals being received in respective holes in the substrate and making connection with the electrically conductive element. A part at least of the transverse aperture may be lined with an optical reflecting material. A reflector may be located in the aperture inclined to the axis of the aperture to reflect radiation along the aperture to or from the waveguide. A member of optically transparent material may be located in the aperture intermediate the waveguide and the optical port. The optical port may be provided by a recess in the device, the member of optically transparent material projecting into the recess. The assembly may include a lens located intermediate the port and the waveguide to focus radiation between the port and the waveguide. The lens may include a graduated refractive index lens.

The substrate may have a second transverse aperture that extends through a part at least of the thickness of the substrate from a surface of the substrate to the waveguide and an optical connector making optical connection to the port on the device via the waveguide at the second aperture.

Examples of optical assemblies in accordance with the present invention will now be described, by way of example, with reference to the accompanying drawings, in which:

Figure 1 is a side elevation view of one example of assembly;

Figure 2 is an enlarged perspective view of an alternative assembly;

Figure 3 to 12 are side elevation views of further modification of the assembly;

Figure 13 is a perspective view of another part of the assembly; and

Figure 14 and 15 show alternatives to the part shown in Figure 13.

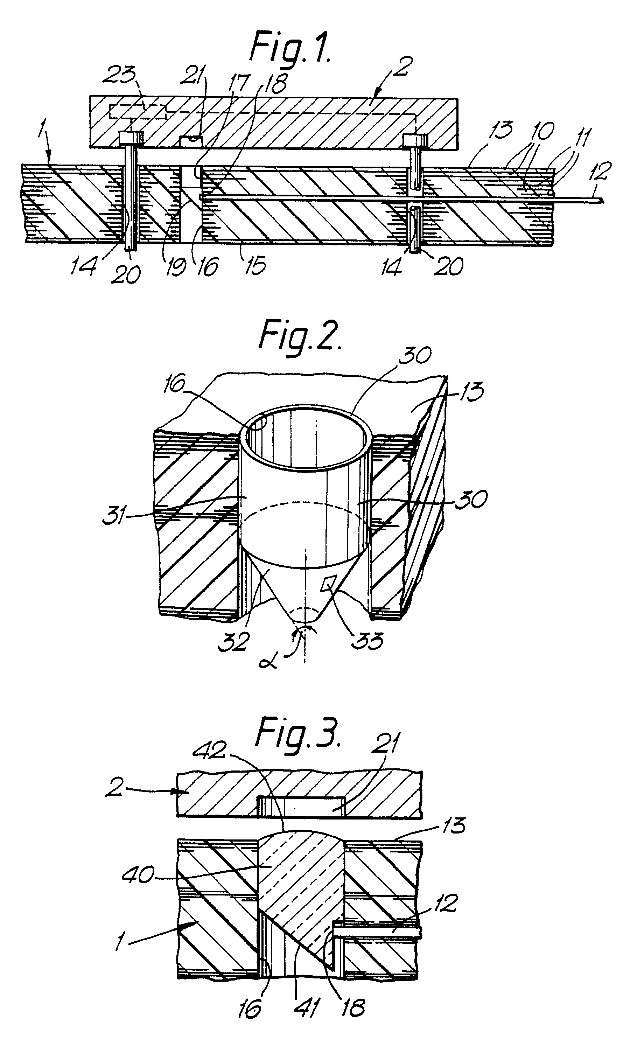

With reference first to Figure 1, the assembly comprises a multilayer electrical circuit board or substrate 1 and an opto-electronic device 2.

The substrate 1 comprises layers of insulating material 10 supporting electrically-conductive tracks 11 and an optical fibre 12 which extends along the substrate within its thickness in a plane parallel to its surface 13. The substrate 1 has vertical holes 14 which receive vertical electrical terminals 20 that project downwardly of the device 2 and that make connection with electrical means 23 within the device. The holes 14 may be plated with an electrically-conductive material which makes connection with one or more of the tracks 11 that is exposed in the hole 14. Alternatively, the terminals 20 may make electrical connection with conductive tracks on the upper surface 13 or lower surface 15 of the substrate.

The optical fibre 12 extends to a transverse or vertical aperture 16 through the substrate 1 which underlies an optical port 21 on the underside of the device 2. The upper end of the aperture 16 is lined with a layer 17 of an optically-reflecting material, such as aluminium or silver. The hole 16 need not extend through the entire thickness of the substrate, it is only necessary that it enables communication between the fibre 12 and the opto-electronic device 2. The layer 17 may be formed by coating the aperture 16 or means of an inserted, preformed sleeve. Opposite the end 18 of the fibre 12, within the aperture 16, there is located a 45 degree reflector 19 inclined to reflect radiation from the end of the fibre vertically upwards along the aperture, or vice versa. In this way, radiation from the fibre 12 is reflected by the reflector 19 and by the reflective internal surface of the lining 17, onto the optical port 21 of the device 2. This arrangement avoids the need for making separate optical connection to the device by means of trailing fibres. It also ensures protection of the fibre from damage. The substrate 1 shields the fibre 12 from light, making it unnecesary to screen the fibre in a jacket so that its diameter can be kept to a minimum.

The end 18 of the fibre 12 located adjacent the aperture 16 may be provided with a converging lens to focus radiation onto the port 21 and improve efficiency.

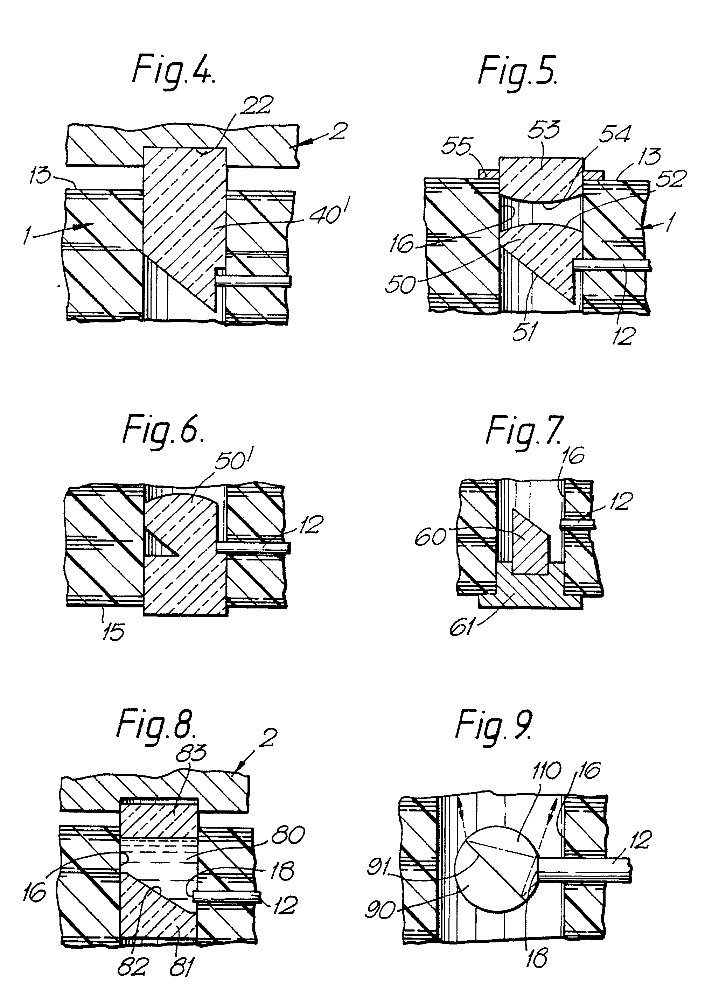

Where the layer 17 lining the aperture 16 is preformed as a sleeve, it may include a reflector, as shown in Figure 2. In this arrangement, the aperture 16 contains an insert 30 of a reflecting metal foil. The upper part 31 is of cylindrical shape identical to the lining 17 shown in Fiqure 1. The lower part 32 of the insert 30 is of a frusto-conical shape with a semi-cone angle $\alpha$ of 45 degrees. In the wall of this lower part 32 is formed a transparent window 33, such as an open aperture, which is aligned with the end 18 of the fibre 12. Radiation is, therefore, reflected from the internal surface of the lower part 32 in a similar way to the reflector 19.

In place of the layer 17 and reflector 19, or the insert 30, a solid rod or light pipe 40 could be used, as shown in Figure 3. The light pipe 40 is of a material, such as glass, transparent to optical radiation and is of generally cylindrical shape. The lower end 41 of the light pipe 40, adjacent the fibre 12, is facetted at an angle of 45 degrees to the axis of the aperture 16 so that radiation is reflected internally of the rod, from the fibre, along the axis of the hole. Radiation diverging from the axis will be reflected at the curved, outer surface of the pipe 40 back into the pipe. The upper end of the pipe 40 has a converging lens 42 which focuses radiation onto the port 21 of the device 2.

An alternative arrangement is shown in Figure 4 which is identical to that in Figure 3 except that the upper end of the light pipe 40' projects above the upper surface 13 of the substrate 1 and into a recess 22 in the lower surface of the device 2 which provides the optical port 21. In this case, the upper end of the rod 40 is flat to provide a butt optical connection with the device 2.

In further arrangement shown in Figure 5, a prism assembly 50 is located in the aperture 16 adjacent the fibre 12. The prism assembly 50 has a lower surface 51 inclined at 45 degrees by which radiation from the fibre 12 is reflected upwardly to a converging, convex lens 52. The lens 52 produces a collimated beam of radiation which is directed upwardly to a lens assembly 53 located at the upper end of the aperture 16. The lens assembly 53 has a converging lens 54, at its lower end, and a collar 55 around its upper end which supports the assembly on the upper surface 13 of the substrate 1. The assembly can either have a converging lens at its upper end similar to the arrangement of Figure 3, or project into a recess 22 in the device 2, as in the arrangement of Figure 4.

Figure 6 shows a prism assembly 50' which extends to the lower surface 15 of the substrate. This enables the vertical position of the assembly to be adjusted.

In a similar way, vertical height adjustment of a mirror surface 60 could be achieved by mounting it on a plinth 61 accessible at the lower end of the aperture 16, as shown in Figure 7.

In the arrangements shown in Figures 5 to 7, the curved surface of the aperture 16 could be lined with a reflective layer to improve efficiency.

The aperture 16 in the substrate could contain a liquid or gel with a refractive index matched to that of the fibre 12. In Figure 8, there is shown the use of a transparent gel 80 with a refractive index close to that of the fibre 12. The gel 80 contacts the end 18 of the fibre so that interface losses are reduced to a minimum. In this arrangement, reflection of radiation is produced by means of a prism 81 of a material with a refractive index greater than that of the gel 80 such that radiation is reflected from the surface 82 of the prism in contact with the gel. At the upper end of the aperture 16 a block of a solid, transparent material 83 is used optically to couple radiation from the gel into the device 2.

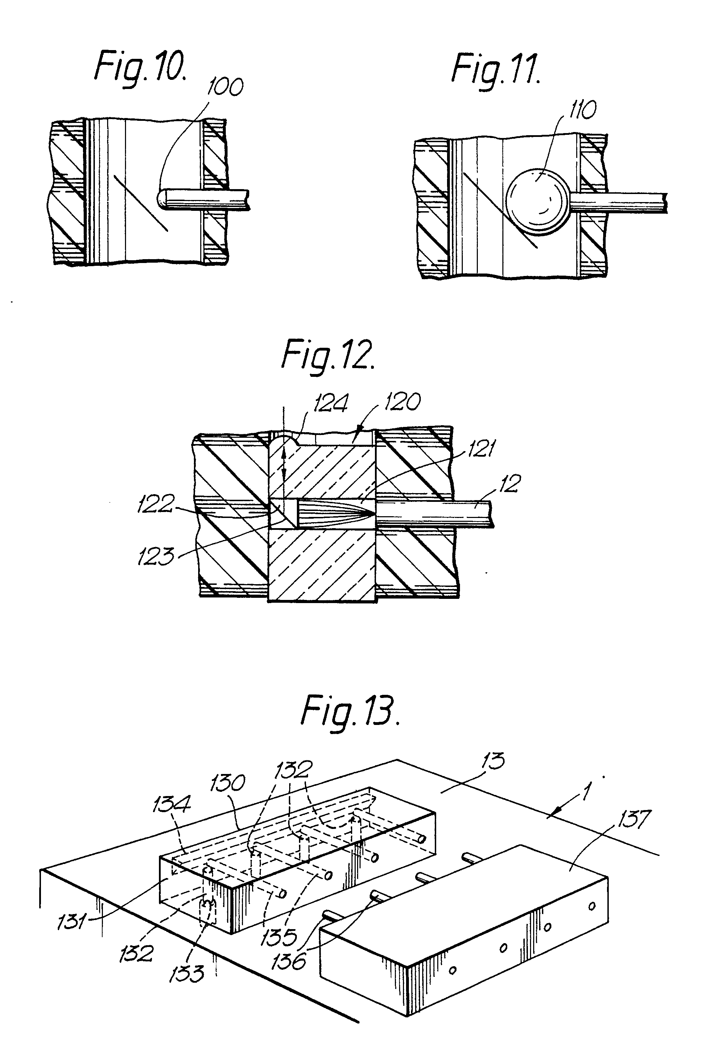

In Figure 9 there is shown an alternative arrangement for reflecting light from the end of the fibre 12 along the aperture 16. In this arrangement, a faceted sphere 90 is optical coupled to the end 18 of the fibre 12. The sphere 90 has a reflecting surface 91 which directs radiation along the hole 16.

The end of the fibre could be provided with an integral lens in the form of a domed end 100, shown in Figure 10, or a sphere 110. shown in Figure 11.

Radiation to or from the end of the fibre 12 could, alternatively, be focussed by means of a graduated refractive index (GRIN) lens, as shown in Figure 12. This arrangement employs an optical assembly 120 having a GRIN lens 121 aligned with the end of the fibre 12, and a prism 122 with a reflecting surface 123 inclined at 45 degrees to the vertical. The reflecting surface 123 directs radiation through a collimating lens 124 on the upper surface of the assembly 120.

The substrate 10 could have several optical fibres which may be located in different planes and extend in different directions. Interconnection between the fibres could be achieved in ways similar to those described above, by means of reflecting elements located in vertical holes to reflect radiation from one fibre to another. The reflecting elements could be prisms, silvered surfaces or dichroic filters to enable wavelength selective transmission lines to be produced.

Optical connection to and from the substrate can be achieved by means of connectors mounted on a surface of the substrate which are optically coupled with the fibre or fibres within the substrate.

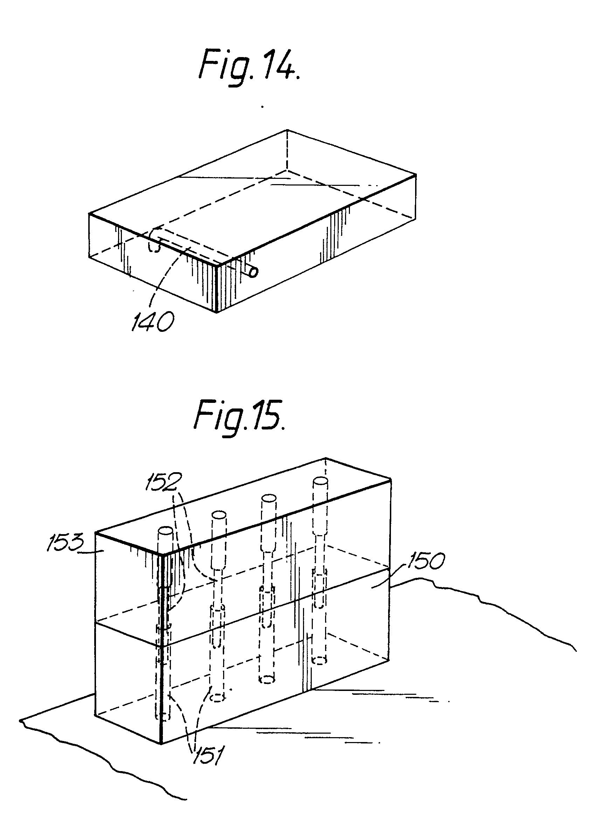

A horizontal connector 130 is shown in Figure 13 which has a rectangular housing 131 that lies horizontally on the upper surface 13 of the substrate 1. The connector has several vertically oriented light guides 132 which project into vertical, transverse apertures 133 in the substrate 1 and which serve to channel radiation from respective fibres 12 (not shown) upwardly. A reflector 134, inclined at 45 degrees to the vertical, reflects radiation from the vertical light guides 132 into respective horizontal light guides 135. The outer end of the horizontal light guides 135 is hollow to receive a respective ferrule 136 in a cooperating plug-in connector 137. Alternatively, respective, bent light guides 140 can be used as shown in Figure 14.

A vertical connector 150 is shown in Figure 15 in which vertical light guides 151 extending into respective holes in the substrate are terminated at their upper end by hollow portions. The hollow portions receive the ferrules 152 of a cooperating plug-in connector 153.

## Claims

1. An optical assembly including an optical device having an optical port by which optical radiation can be supplied to or from the device, a planar substrate on a surface of which the device is mounted, characterised in that the substrate (1) has an optical radiation waveguide (12) that extends within the thickness of the substrate in a plane parallel to the surface (13), that a transverse aperture (16) extends through a part at least of the thickness of the substrate (1) from the surface (13) to the waveguide (12), and that the aperture (16) optically interconnects the port (21) with the waveguide (12).

2. An optical assembly according to Claim 1, characterised in that the optical device (2) includes electrical means (23), and that the substrate (1) includes an electrically conductive element (11) by means of which electrical signals are supplied to or from the electrical means.

3. An optical assembly according to Claim 2, characterised in that the optical device (2) includes electrical terminals (20), and that the terminals (20) are received in respective holes (14) in the substrate (1) and make connection with the electrically conductive element (11).

4. An optical assembly according to any one of the preceding claims, characterised in that a part at least of the transverse aperture (16) is lined with an optically reflecting material (17, 30).

5. An optical assembly according to any one of the preceding claims, characterised in that a reflector (19, 32, 41, 51, 82, 91) is located in the aperture (16) inclined to the axis of the aperture to reflect radiation along the aperture to or from the waveguide (12).

6. An optical assembly according to any one of the preceding claims, characterised in that a member (40, 40', 50, 50') of optically transparent material is located in the aperture (16) intermediate the waveguide (12) and the optical port (21).

7. An optical assembly according to Claim 6, characterised in that optical port (21) is provided by a recess (22) in the device 2, and that the member (40') of optically transparent material projects into the recess (22).

8. An optical assembly according to any one of the preceding claims, characterised in that the assembly includes a lens (42, 52, 54, 121) located intermediate the port (21) and the waveguide (12) to focus radiation between the port and the waveguide.

9. An optical assembly according to Claim 8, characterised in that the lens includes a graduated refractive index lens (121).

10. An optical assembly according to any one of the preceding claims, characterised in that the substrate (1) has a second transverse aperture (133) that extends through a part at least of the thickness of the substrate (1) from a surface of the substrate to the waveguide (12), and that an optical connnector (130, 150) makes optical connection to the port (21) on the device (1) via the waveguide (12) at the second aperture (133).

# Fig.1.

# Fig.2.

# Fig.3.

Fig.4.

Fig.5.

Fig.6.

Fig.7.

Fig.8.

Fig.9.

EP 0 393 829 A2

Fig.10.

Fig.11.

Fig.12.

Fig.13.

*Fig.14.*

140

*Fig.15.*

152

153

150

151